# EUROPEAN PATENT APPLICATION

(11) **EP 4 826 654 A1**
(43) Date of publication of application: **21.10.2026**
(21) Application number: 23940017.9
(22) Date of filing: 25.12.2023
(51) Int. Cl.: G06T 7/73, G06T 7/33

(54) **POSE ESTIMATION METHOD, READABLE STORAGE MEDIUM, AND INTELLIGENT DEVICE**

(30) Priority: 14.12.2023 CN 202311728395
(71) Applicant: Anhui NIO Autonomous Driving Technology Co., Ltd., Hefei, Anhui 230601 (CN)
(72) Inventor: BAI, Xinhui, Jiading District Shanghai 201804 (CN); LU, Chao, Jiading District Shanghai 201804 (CN); YOU, Zhenxing, Jiading District Shanghai 201804 (CN); SUN, Li, Jiading District Shanghai 201804 (CN); YUAN, Hongyuan, Jiading District Shanghai 201804 (CN); REN, Shaoqing, Jiading District Shanghai 201804 (CN)
(74) Representative: Vossius & Partner Patentanwälte Rechtsanwälte mbB
(86) International application number: PCT/CN2023/141608
(87) International publication number: WO 2025/123422

(57) **Abstract**

The invention relates to the technical field of automated driving, and particularly provides a pose estimation method, a readable storage medium, and a smart device, with a view to solving the problem of how to obtain a more accurate pose of a point cloud frame, so as to further improve the accuracy of a lidar odometer. According to the invention, a current point cloud frame collected by a lidar arranged on a smart device is obtained, and the current point cloud frame is registered with a local point cloud map to obtain a pose estimation result of the current point cloud frame. The local point cloud map is obtained by splicing historical point cloud frames in a sliding window and optimizing the historical point cloud frames with a factor graph. Optimization variables of the factor graph are poses and surfel features of the historical point cloud frames. The poses and the surfel features of the historical point cloud frames added in the sliding window can be optimized at the same time, and cumulative errors during point cloud registration can be effectively reduced to obtain a more accurate pose estimation result, thereby improving the accuracy of the lidar odometer.

## Description

The present application claims priority to Chinese Patent Application No. 202311728395.2, filed on December 14, 2023 and entitled "POSE ESTIMATION METHOD, READABLE STORAGE MEDIUM, AND SMART DEVICE", which is incorporated herein by reference in its entirety.

### Technical Field

The invention relates to the technical field of automated driving, and particularly provides a pose estimation method, a readable storage medium, and a smart device.

### Background Art

In autonomous driving technology, lidar odometers are becoming increasingly widely used. The lidar odometer obtains a pose of a point cloud frame by estimating transformation between successive point cloud frames.

However, an existing lidar odometer estimates a motion state at the current moment mainly by means of observations of point cloud feature values at the current moment, and registers current frame point cloud with a local point cloud map, which does not take an observation error into consideration and fixes a state at a historical moment. This is likely to cause cumulative errors, is not robust for some degradation scenarios, and suffers from the problems of poor accuracy of the lidar odometer and proneness to drift.

Accordingly, a new pose estimation solution is needed in this field to solve the above problems.

### Summary

In order to overcome the above-mentioned defects, the invention is proposed to solve or at least partially solve the problem of how to obtain a more accurate pose of a point cloud frame, so as to further improve the accuracy of a lidar odometer.

In a first aspect, the invention provides a pose estimation method, including:
obtaining a current point cloud frame collected by a lidar arranged on a smart device; and
registering the current point cloud frame with a local point cloud map to obtain a pose estimation result of the current point cloud frame,
where the local point cloud map is obtained by splicing historical point cloud frames in a sliding window having a preset window size, and optimizing the historical point cloud frames with a factor graph; and
optimization variables of the factor graph include poses and surfel features of the historical point cloud frames.

In a technical solution of the above pose estimation method, the method further includes obtaining the local point cloud map according to the following steps:
obtaining the poses of the historical point cloud frames in the sliding window;
obtaining an initial point cloud map based on the poses and the historical point cloud frames; and
optimizing the poses and the surfel features of the historical point cloud frames contained in the initial point cloud map with the factor graph to obtain the local point cloud map.

In a technical solution of the above pose estimation method, the method further includes constructing the factor graph according to the following steps:
setting variable nodes of the factor graph, where the variable nodes comprise pose variable nodes corresponding to the poses of the historical point cloud frames and surfel feature variable nodes corresponding to the surfel features;
setting constraints of the variable nodes, where each pose variable node is provided with at least one constraint for constraining the poses; and each surfel feature variable node is provided with at least one constraint for constraining the surfel features; and
constructing the factor graph based on the variable nodes and the constraints.

In a technical solution of the above pose estimation method, optimizing the poses and the surfel features of the historical point cloud frames contained in the initial point cloud map with the factor graph includes:

performing, based on the factor graph, sliding window optimization on the poses and the surfel features of the historical point cloud frames contained in the initial point cloud map, optimizing each constraint separately after the sliding optimization to form an optimized factor graph, and optimizing the poses and the surfel features in the sliding window based on the optimized factor graph during next sliding window optimization.

In a technical solution of the above pose estimation method,
optimizing each constraint separately to form an optimized factor graph includes:
obtaining residuals of each constraint; and
optimizing each constraint separately based on the residuals of each constraint to form the optimized factor graph.

In a technical solution of the above pose estimation method, optimizing each constraint separately based on the residuals of each constraint includes:
obtaining a Jacobian matrix of the residuals with respect to the optimization variables based on the residuals of each constraint; and
optimizing each constraint based on the residuals and the Jacobian matrix.

In a technical solution of the above pose estimation method, optimizing each constraint based on the residuals and the Jacobian matrix includes:
optimizing each constraint by a least square method based on the residuals and the Jacobian matrix.

In a technical solution of the above pose estimation method, obtaining an initial point cloud map based on the poses and the historical point cloud frames includes:
splicing the historical point cloud frames based on the poses to obtain a spliced point cloud map;
voxelizing the spliced point cloud map to obtain a voxelized point cloud map; and
constructing an octree based on the voxelized point cloud map to obtain the initial point cloud map.

In a technical solution of the above pose estimation method, obtaining the poses of the historical point cloud frames in the sliding window includes:
obtaining initial poses of the historical point cloud frames based on other odometers of the smart device;
registering the historical point cloud frames with the local point cloud map based on the initial poses, to obtain a distance residual between the surfel features of the historical point cloud frames and the surfel features of the local point cloud map; and
optimizing the initial poses based on the distance residual to obtain the poses of the historical point cloud frames, and adding the historical point cloud frames to the sliding window based on the poses.

In a technical solution of the above pose estimation method, the method further includes obtaining the surfel features based on the following step:
using 3D coordinates of a nearest point on a surfel from an origin of a current coordinate system as a surfel feature of the surfel.

In a technical solution of the above pose estimation method, the method further includes:
deleting the oldest historical point cloud frame when the number of the historical point cloud frames in the sliding window is greater than the preset window size.

In a second aspect, a computer-readable storage medium is provided. A plurality of program codes are stored in the computer-readable storage medium, and the program codes are adapted to be loaded and executed by a processor to perform the pose estimation method in any one of the technical solutions of the above pose estimation method.

In a third aspect, a smart device is provided, including:
at least one processor;
and a memory in communication connection with the at least one processor,
where the memory stores a computer program that, when executed by the at least one processor, causes the processor to implement the pose estimation method in the technical solutions of the pose estimation method.

The one or more technical solutions of the invention described above have at least one or more of the following beneficial effects:
In the technical solutions for implementing the invention, according to the invention, a current point cloud frame collected by a lidar arranged on a smart device is obtained, and the current point cloud frame is registered with a local point cloud map to obtain a pose estimation result of the current point cloud frame. The local point cloud map is obtained by splicing historical point cloud frames in a sliding window and optimizing the historical point cloud frames with a factor graph. Optimization variables of the factor graph include the poses and surfel features of the historical point cloud frames. With the configuration, according to the invention, the poses and the surfel features of the historical point cloud frames added in the sliding window can be optimized at the same time, so that when the current point cloud frame is registered with the local point cloud map, cumulative errors can be effectively reduced to obtain a more accurate pose estimation result, thereby improving the accuracy of a lidar odometer.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of a pose estimation method according to an embodiment of the invention;
FIG. 2 is a schematic diagram of surfel parameterization according to an implementation of an embodiment of the invention;
FIG. 3 is a schematic flowchart of main steps of obtaining a local point cloud map according to an implementation of an embodiment of the invention; and
FIG. 4 is a schematic diagram of a connection between a memory and a processor in a smart device according to an embodiment of the invention.

### Detailed Description of Embodiments

Some implementations of the invention are described below with reference to the accompanying drawings. Those skilled in the art should understand that these implementations are only used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

An automated driving system (ADS) means that the system continuously performs all dynamic driving tasks (DDTs) within its own operational domain design (ODD). That is, the machine system is allowed to fully undertake the task of automatic vehicle control only under specified appropriate driving scenario conditions, that is, when a vehicle meets the ODD conditions, the system is activated, and the system replaces a human driver as a driving subject of the vehicle. The DDT refers to continuous lateral (turn left and right) and longitudinal motion control (acceleration, deceleration, and a constant speed) and to detection of and response to a target and an event in vehicle driving environment. The ODD refers to conditions under which the automated driving system can operate safely, and the set conditions may include a geographic location, the type of a road, a range of speed, weather, time, national and local traffic laws and regulations, etc.

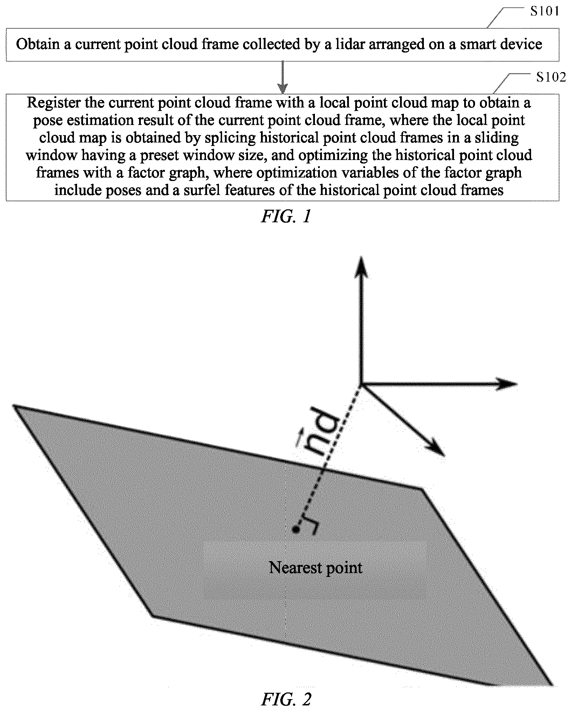

Referring to FIG. 1, FIG. 1 is a schematic flowchart of main steps of a pose estimation method according to an embodiment of the invention. As shown in FIG. 1, the pose estimation method according to this embodiment of the invention mainly includes the following steps S101 and S102.

At step S101, a current point cloud frame collected by a lidar arranged on a smart device is obtained.

In this embodiment, the current point cloud frame collected by the lidar arranged on the smart device may be obtained.

In an implementation, the smart device may be a driving device, a smart vehicle, a robot, etc.

At step S102, the current point cloud frame is registered with a local point cloud map to obtain a pose estimation result of the current point cloud frame, where the local point cloud map is obtained by splicing the historical point cloud frames in a sliding window having a preset window size, and optimizing the historical point cloud frames with a factor graph; and optimization variables of the factor graph include poses and surfel features of the historical point cloud frames.

In this embodiment, a lidar odometer may register the current point cloud frame with the local point cloud map to obtain the pose estimation result of the current point cloud frame. The local point cloud map is obtained by splicing the historical frame point clouds collected by a lidar and the poses of the historical frame point clouds, and optimization with the factor graph based on the sliding window. Optimization variables of the factor graph include the poses and surfel features of the historical point cloud frames. That is, the historical point cloud frames may be modeled as a plurality of surfels, and a parameter representing each surfel may be used as a surfel feature of each historical point cloud frame. Those skilled in the art may set a value of the preset window size based on a requirement of a practical application.

In an implementation, the surfel feature may be a plane equation of each surfel.

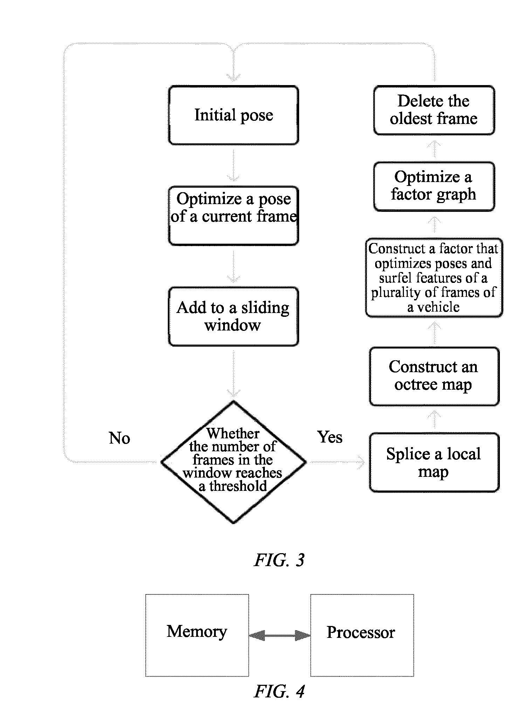

In an implementation, reference may be made to FIG. 2. FIG. 2 is a schematic diagram of surfel parameterization according to an implementation of an embodiment of the invention. As shown in FIG. 2, 3D coordinates of a nearest point in a surfel from an origin of a current coordinate system, that is, *n̅d* in FIG. 2, may be used as a surfel feature of the surfel to implement surfel parameterization. In this way, the parameter form can be minimized and the computation burden can be reduced while it is ensured that the surfel feature has a real physical significance.

Based on steps S101 and S102 described above, according to this embodiment of the invention, a current point cloud frame collected by a lidar arranged on a smart device is obtained, and the current point cloud frame is registered with a local point cloud map to obtain a pose estimation result of the current point cloud frame. The local point cloud map is obtained by splicing historical point cloud frames in a sliding window and optimizing the historical point cloud frames with a factor graph. Optimization variables of the factor graph include the poses and surfel features of the historical point cloud frames. With the configuration, according to this embodiment of the invention, the poses and the surfel features of the historical point cloud frame added in the sliding window can be optimized at the same time, so that when the current point cloud frame is registered with the local point cloud map, cumulative errors can be effectively reduced to obtain a more accurate pose estimation result, and improve the accuracy of a lidar odometer.

The process of obtaining the local point cloud map is further described below.

In an implementation of an embodiment of the invention, the local point cloud map may be obtained according to the following steps S201 to S203.

At step S201, the poses of the historical point cloud frames in the sliding window are obtained.

In this implementation, step S201 may further include the following steps S2011 to S2013.

At step S2011, initial poses of the historical point cloud frames are obtained based on other odometers of the smart device.

In this implementation, the initial poses of the historical point cloud frames may be obtained based on other odometers of the smart device. The other odometers may be visual odometers, wheeled odometers, and the like.

At step S2012, the historical point cloud frames are registered with the local point cloud map based on the initial poses, to obtain distance residuals between the surfel features of the historical point cloud frames and the surfel features of the local point cloud map.

In this implementation, the current historical point cloud frames may match the local point cloud map (scan to map) based on the initial poses, to obtain the distance residuals between the surfel features of the current historical point cloud frames and the surfel features of the local point cloud map.

At step S2013, the initial poses are optimized based on the distance residuals to obtain the poses of the historical point cloud frames, and the historical point cloud frames are added to the sliding window based on the poses.

In this implementation, the distance residuals may be used to optimize the initial poses, so as to obtain the poses of the historical point cloud frames and add the historical point cloud frames to the sliding window.

At step S202, an initial point cloud map is obtained based on the poses and the historical point cloud frames.

In this implementation, step S202 may further include the following steps S2021 to S2023.

At step S2021, the historical point cloud frames are spliced based on the poses to obtain a spliced point cloud map.

At step S2022, the spliced point cloud map is voxelized to obtain a voxelized point cloud map.

At step S2023, an octree is constructed based on the voxelized point cloud map to obtain the initial point cloud map.

In this implementation, the historical point cloud frames may be spliced based on their poses, the spliced point cloud map may be voxelized to obtain the voxelized point cloud map, and the octree may be constructed based on the voxelized point cloud map for later look-up and indexing, so as to obtain the initial point cloud map.

At step S203, the poses and the surfel features of the historical point cloud frames contained in the initial point cloud map are optimized with the factor graph to obtain the local point cloud map.

In this implementation, the poses and the surfel features of the historical point cloud frames in the initial point cloud map may be optimized with the factor graph to obtain the local point cloud map. A conventional method for optimization based on a factor graph in the technical field of automated driving may be used to optimize the pose and surfel feature of each historical point cloud frame in the sliding window based on the above factor graph, which is not specifically limited in the embodiments of the invention.

In an implementation, the factor graph may be constructed based on the following steps 301 to S303.

At step 301, variable nodes of the factor graph are set, where the variable nodes include pose variable nodes corresponding to the poses of the historical point cloud frames and surfel feature variable nodes corresponding to the surfel features.

At step 302, constraints of the variable nodes are set, where each pose variable node is provided with at least one constraint for constraining a pose; and each surfel feature variable node is provided with at least one constraint for constraining a surfel feature.

At step 303, the factor graph is constructed based on the variable nodes and the constraints.

In this implementation, the variable nodes of the factor graph may be pose variable nodes corresponding to the poses of the historical point cloud frames and surfel feature variable nodes corresponding to the surfel features, and at least one constraint is set for each variable node, so that the factor graph is constructed based on the variable nodes and the constraint terms.

In an implementation, step S203 may be further configured to include:

performing, based on the factor graph, sliding window optimization on the poses and the surfel features of the historical point cloud frames contained in the initial point cloud map, optimizing each constraint separately after the sliding optimization to form an optimized factor graph, and optimizing the poses and the surfel features in the sliding window based on the optimized factor graph during next sliding window optimization.

In this implementation, the poses and the surfel features in the sliding window may be optimized, and each constraint may be optimized to form the optimized factor graph, and the poses and the surfel features in the sliding window are optimized based on the optimized factor graph during next sliding window optimization.

In an implementation, residuals of each constraint may be obtained, and the constraint may be optimized based on the residuals, thus forming an optimized factor graph.

In an implementation, a Jacobian matrix of the residuals with respect to the optimization variables may be calculated, and each constraint may be optimized based on the residuals and the Jacobian matrix. The constraint may be optimized by a conventional method for optimization based on the residuals and the Jacobian matrix in the field, which is not limited in the invention.

In an implementation, each constraint may be optimized based on the residuals and the Jacobian matrix by a least square method, and the poses and the surfel features in the sliding window may be thus optimized.

In an implementation, when the number of the historical point cloud frames in the sliding window is greater than the preset window size, the oldest historical point cloud frame may be deleted and a new historical point cloud frame may be added to repeat the above-mentioned process of obtaining a local point cloud map.

In an implementation, reference may be made to FIG. 3. FIG. 3 is a schematic flowchart of main steps of obtaining a local point cloud map according to an implementation of an embodiment of the invention. As shown in FIG. 3, during obtaining a local point cloud map, the initial poses of the historical point cloud frames may be obtained first based on odometers from other sources, the pose of the current frame (current historical point cloud frame) may be optimized based on the distance residual between the current historical point cloud frame and the map, and the optimized current frame may be added to the sliding window. It is determined whether the number of frames in the sliding window reaches a threshold (preset sliding window size). If not, the process continues to obtain a new historical point cloud frame. If yes, the historical point cloud frames in the sliding window are spliced into a local map, and an octree map is constructed. A factor graph that optimizes the poses and surfel features of a plurality of historical point cloud frames in the sliding window simultaneously is constructed, and the factor graph is optimized to delete the oldest historical point cloud frame and continue to obtain a new historical point cloud frame.

It should be noted that, although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

The invention further provides a computer-readable storage medium. In an embodiment of the computer-readable storage medium according to the invention, the computer-readable storage medium may be configured to store a program for performing the pose estimation method in the above method embodiments, and the program may be loaded and executed by a processor to implement the above pose estimation method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention further provides a smart device. The smart device may include at least one processor; and a memory in communication connection with the at least one processor, where the memory stores a computer program that, when executed by the at least one processor, causes the processor to implement the method described in any of the above embodiments. The smart device according to the invention may include a driving device, a smart car, a robot, etc. Referring to FIG. 4, FIG. 4 is a schematic diagram of a connection between a memory and a processor in a smart device according to an embodiment of the invention. FIG. 4 shows by way of example that the memory is in communication connection with the processor by means of a bus.

In some embodiments of the invention, the smart device further includes at least one sensor configured to sense information. The sensor is in communication connection with any type of processor mentioned in the invention. Optionally, the smart device further includes an automated driving system configured to guide the smart device to drive autonomously or assist in driving. The processor is in communication with the sensor and/or the automated driving system, for performing the method described in any of the above embodiments.

Further, it should be understood that, since the configuration of modules is merely intended to illustrate function units of the apparatus in the invention, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or combined. Such a split or combination of specific modules does not cause the technical solutions to depart from the principle of the invention. Therefore, technical solutions after any such split or combination shall all fall within the scope of protection of the invention.

The related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the invention varies depending on the specific product/service scenario, and shall be subject to the specific scenario in which the user uses the product/service. It may involve account information, device information, driving information, vehicle information, or other related information of the user. The applicant treats and handles the user personal information with a high degree of diligence.

The invention attaches great importance to the security of the user personal information, and reasonable and feasible security protection measures that comply with industry standards have been taken to protect information of the user and prevent the personal information from unauthorized access, public disclosure, use, modification, damage or loss.

Heretofore, the technical solutions of the invention have been described in combination with the preferred implementations shown in accompanying drawings. However, those skilled in the art can readily understand that the scope of protection of the invention is apparently not limited to these particular implementations. Those skilled in the art can make equivalent changes or substitutions to the related technical features without departing from the principle of the invention, and all the technical solutions with such changes or substitutions shall fall within the scope of protection of the invention.

## Claims

1. A pose estimation method, comprising:
obtaining a current point cloud frame collected by a lidar arranged on a smart device; and
registering the current point cloud frame with a local point cloud map to obtain a pose estimation result of the current point cloud frame,
wherein the local point cloud map is obtained by splicing historical point cloud frames in a sliding window having a preset window size, and optimizing the historical point cloud frames with a factor graph; and
optimization variables of the factor graph comprise poses and surfel features of the historical point cloud frames.

2. The pose estimation method according to claim 1, further comprising obtaining the local point cloud map according to the following steps:
obtaining the poses of the historical point cloud frames in the sliding window;
obtaining an initial point cloud map based on the poses and the historical point cloud frames; and
optimizing the poses and the surfel features of the historical point cloud frames contained in the initial point cloud map with the factor graph to obtain the local point cloud map.

3. The pose estimation method according to claim 2, further comprising constructing the factor graph according to the following steps:
setting variable nodes of the factor graph, wherein the variable nodes comprise pose variable nodes corresponding to the poses of the historical point cloud frames and surfel feature variable nodes corresponding to the surfel features;
setting constraints of the variable nodes, wherein each pose variable node is provided with at least one constraint for constraining the poses; and each surfel feature variable node is provided with at least one constraint for constraining the surfel features; and
constructing the factor graph based on the variable nodes and the constraints.

4. The pose estimation method according to claim 3, wherein
optimizing the poses and the surfel features of the historical point cloud frames contained in the initial point cloud map with the factor graph comprises:
performing, based on the factor graph, sliding window optimization on the poses and the surfel features of the historical point cloud frames contained in the initial point cloud map, optimizing each constraint separately after the sliding optimization to form an optimized factor graph, and optimizing the poses and the surfel features in the sliding window based on the optimized factor graph during next sliding window optimization.

5. The pose estimation method according to claim 4, wherein
optimizing each constraint separately to form an optimized factor graph comprises:
obtaining residuals of each constraint; and
optimizing each constraint separately based on the residuals of each constraint to form the optimized factor graph.

6. The pose estimation method according to claim 5, wherein
optimizing each constraint separately based on the residuals of each constraint comprises:
obtaining a Jacobian matrix of the residuals with respect to the optimization variables based on the residuals of each constraint; and
optimizing each constraint based on the residuals and the Jacobian matrix.

7. The pose estimation method according to claim 6, wherein
optimizing each constraint based on the residuals and the Jacobian matrix comprises:
optimizing each constraint by a least square method based on the residuals and the Jacobian matrix.

8. The pose estimation method according to claim 2, wherein
obtaining an initial point cloud map based on the poses and the historical point cloud frames comprises:
splicing the historical point cloud frames based on the poses to obtain a spliced point cloud map;
voxelizing the spliced point cloud map to obtain a voxelized point cloud map; and
constructing an octree based on the voxelized point cloud map to obtain the initial point cloud map.

9. The pose estimation method according to claim 2, wherein
obtaining the poses of the historical point cloud frames in the sliding window comprises:
obtaining initial poses of the historical point cloud frames based on other odometers of the smart device;
registering the historical point cloud frames with the local point cloud map based on the initial poses, to obtain a distance residual between the surfel features of the historical point cloud frames and the surfel features of the local point cloud map; and
optimizing the initial poses based on the distance residual to obtain the poses of the historical point cloud frames, and adding the historical point cloud frames to the sliding window based on the poses.

10. The pose estimation method according to any one of claims 1 to 9, further comprising obtaining the surfel features according to the following step:
using 3D coordinates of a nearest point on a surfel from an origin of a current coordinate system as a surfel feature of the surfel.

11. The pose estimation method according to any one of claims 1 to 10, further comprising:
deleting the oldest historical point cloud frame when the number of the historical point cloud frames in the sliding window is greater than the preset window size.

12. A computer-readable storage medium configured to store a plurality of program codes, wherein the program codes are adapted to be loaded and executed by a processor to perform the pose estimation method according to any one of claims 1 to 11.

13. A smart device, comprising:
at least one processor;
and a memory in communication connection with the at least one processor,
wherein the memory stores a computer program that, when executed by the at least one processor, causes the processor to implement the pose estimation method according to any one of claims 1 to 11.
